# EUROPEAN PATENT APPLICATION

(11) **EP 3 889 367 A1**
(43) Date of publication of application: **06.10.2021**
(21) Application number: 21000096.4
(22) Date of filing: 06.04.2021
(51) Int. Cl.: E04B 7/04, E04B 7/22, E04D 3/35, E04D 3/40

(54) **ROOFING PANEL**

(30) Priority: 02.04.2020 GB 202004909
(71) Applicant: Palmer, Nigel John, Rushden Northants NN10 6BQ (GB)
(72) Inventor: Palmer, Nigel John, Rushden Northants NN10 6BQ (GB)
(74) Representative: Banford, Jonathan

(57) **Abstract**

A roofing panel (21,31) for use in the construction of pitched roofs (20), comprises a rectangular flat panel (21,31) extending from an upper ridge end to a lower eaves end, with opposite first and second lateral edges extending between the ridge end eaves ends. The panels (21,31) have a core (24) of thermally insulating material, such as PU foam, sandwiched between two layers (25) of thin, tough structural material, such as oriented strand board (OSB), which form opposite inner and outer surfaces of the panel (21,31). Two transverse notches (22, 23) having a right-angled triangular section extend completely across the inner surface of the roofing panel (21,3 1) between its first and second lateral edges. A first of these notches (22) is adjacent the eaves end of the panel (21,31) and fits over an upper end of a vertical wall (2,3) of a building, and a second of these notches (23) is at or adjacent the ridge end of the panel (21,31), such that the eaves ends of an opposed pair of roof panels (21,31) will meet to form a ridge line of the roof (20), with their second transverse notches (23) between them fitting over a ridge beam (12) of the roof (20). Preferably, one or more lateral edges of each roofing panel (21,31) has a coupling profile (41) which can be interlocked with a coupling profile (41) on an adjacent panel (21,31) to fasten adjacent roofing panels (21,31) mechanically together and to prevent air or water passing between adjacent roofing panels (21,31) of the roof (20). A roof surface of conventional tiles, slates or the like may be applied over the structure of roofing panels (21,31).

## Description

The present invention relates to structural panels for assembly into a roof of a house or other building. More particularly but not exclusively, it relates to roofing panels for the rapid and convenient assembly of pitched roofs, particularly for domestic dwellings. The present invention further relates to an improved form of joint for connecting structural elements such as roofing panels.

Traditional pitched roof structures, comprising roof trusses, rafters, battens and so forth as a support for a tiled or slate roof, require considerable quantities of quality structural timber, and can be slow and expensive to construct. Structural insulated panels (SIPs), comprising flat slabs of insulating material, sandwiched between two layers of oriented strand board (OSB), plywood or other thin, strong, resilient protective sheet material, have been used for wall construction, and more recently for roof structures. This should provide a flat continuous pitched roof structure, suitable as a substrate for an outer covering of tiles or slates. These SIPs roof panels have significant drawbacks, however. To begin with, during construction, a sloping flat SIP panel must be rested at an angle to the vertical against a ridge beam defining a top of the roof and against a top of a respective wall. It can be difficult to prevent the panel from slipping out of place or even sliding off the roof. Also, joining adjacent SIP panels to form a continuous structure without air gaps between panels can be difficult, using existing techniques to spline them together. For these and other reasons, SIP panels have not come into use for pitched roof constructions as much as would be expected from their advantages over conventional wooden roof structures, such as speed of assembly and use of cheaper raw materials.

It is hence an object of the present invention to provide a roofing panel having a SIP structure that obviates the above disadvantages of existing SIP roof panels and allows the rapid, convenient and economical assembly of pitched roofs on buildings, particularly domestic residential buildings. It is a further object of the present invention to provide improved joint structures to connect such roofing panels to a building under construction and to each other. Another object of the present invention is to provide a method of assembling such roofing panels into a pitched roof structure.

According to a first aspect of the present invention, there is provided a roofing panel for use in the construction of pitched roofs, comprising a rectangular flat panel having a ridge end located uppermost in use, an eaves end opposite the ridge end and located lowermost in use, and first and second lateral edges extending along opposite sides of the panel between its ridge end and its eaves end, the panel comprising a core of thermally insulating material sandwiched between layers of thin, tough structural material, said layers forming in use opposite inner and outer surfaces of the panel, wherein the panel is provided with two transverse notches, each extending across the panel between its first and second lateral edges, parallelly to the ridge and eaves ends of the panel, a first of said notches being disposed adjacent the eaves end and a second of said notches being disposed at or adjacent the ridge end of the panel.

The first said notch is thus disposed to engage with a top of a wall of a building, and the second said notch is disposed to engage with a ridge beam extending between upper ends of respective gable ends of the building, thus locating the panel in position to form part of a pitched roof structure.

Preferably, each notch comprises two faces extending into the panel to meet substantially at a right angle.

Each notch may thus have a profile comprising a right-angled triangle.

Advantageously, a first face of each notch is angled to extend substantially horizontally in use and a second face of each notch is angled to extend substantially vertically in use.

Each said first face of a notch may thus rest supported in use on an upper surface of a wall of the building and on a ridge beam of the building, respectively.

Preferably, the ridge end of the panel extends at an acute angle to the outer surface of the panel, such that it extends substantially vertically in use.

Said ridge end may thus extend substantially parallelly and adjacent to a ridge end of a second such roofing panel, when each roofing panel is located on opposite sides of the ridge beam, forming opposite faces of the pitched roof.

In a preferred embodiment, the roofing panel is provided on at least one lateral edge with coupling means adapted to link the roofing panel to an adjacent roofing panel.

Preferably, said coupling means is adapted to link with a corresponding coupling means on the adjacent roofing panel.

Said coupling means may be adapted to link with a substantially identical coupling means on the adjacent roofing panel.

Preferably, each said coupling means comprises protrusion means and recess means, each aligned transversely to a plane of the panel, with the recess means being located between the protrusion means and a remainder of the panel.

Said protrusion means and said recess means may each extend continuously along the lateral edge of the roofing panel.

The protrusion means and the recess means may each have substantially identical profiles, optionally having identical triangular profiles.

Preferably, the coupling means is adapted to overlap with a corresponding coupling means on an adjacent roofing panel to create a barrier to passage of air and/or moisture between said roofing panels.

Preferably, the coupling means is adapted so to interlock with a corresponding coupling means on an adjacent roofing panel as to oppose lateral separation of the respective roofing panels.

Preferably, the thermally insulating material comprises a foamed polymeric material.

Advantageously, the thermally insulating material comprises a polyurethane foam.

The thermally insulating material core may comprise a plurality of thermally insulating materials.

Preferably, the thin, tough structural material is a composite material containing wood and resin.

Advantageously, said composite material comprises oriented strand board (OSB).

Alternatively, the thin, tough structural material may comprise magnesium oxide (MGO) board, glass fibre or cement particle board (CPB).

According to a second aspect of the present invention, there is provided a pitched roof for a building, comprising a plurality of roof panels as described in the first aspect above, each extending from a ridge line of the pitched roof to a top of a wall of the building.

Preferably, a portion of each roofing panel extends beyond the top of the wall, so as to support eaves of the pitched roof.

The roofing panels preferably define between them planar, sloped roof surfaces covered with conventional tiles or slates.

Preferably, the pitched roof comprises an even number of roofing panels.

Advantageously, the pitched roof comprises at least one pair of said roofing panels, the panels of the or each pair meeting at the ridge line of the roof and extending to opposite walls of the building.

Preferably, the building comprises two opposed gable end walls and a ridge beam extending from adjacent a peak of one said gable end wall to adjacent a peal of the other said gable end wall.

The first notch of each roofing panel may then engage with the top of a respective wall, with the second notch of each roofing panel engaging with the ridge beam.

In a preferred embodiment, each roofing panel is mounted to each laterally adjacent roofing panel in the roof by means of an interlocking lap joint.

According to a third aspect of the present invention, there is provided a method for constructing a pitched roof for a building, comprising the steps of providing a plurality of roofing panels as described in the first aspect above, providing a building having opposed side walls and a ridge beam extending parallelly to said side walls to define a ridge line of the pitched roof, and mounting said roofing panels such that a first notch of each engages with a top of the side walls and a second notch of each engages with the ridge beam.

Preferably, the method comprises the further step of fastening the roofing panel to the ridge beam and the top of the wall, for example by means of screws extending through the panel into the ridge beam/wall, respectively.

Advantageously, the method comprises the step of constructing a conventional tiled or slate roof surface on top of the roofing panels.

Preferably, the method comprises the step of coupling each roofing panel to each other roofing panel laterally adjacent it on the roof by means of interlocking lap joint structures provided along the respective lateral edges of the roofing panels.

According to a fourth aspect of the present invention, there is provided a joint for coupling two laterally adjacent roofing panels together, within a roof structure, said joint comprising a first joint structure extending along a lateral edge of a first of the roofing panels, and a second joint structure extending along an opposing lateral edge of a second of the roofing panels, wherein said joint structures overlap to create a barrier against passage of air and/or moisture through the joint and interlock to oppose lateral separation of the panels.

Preferably, each said joint structure has a cross-section comprising a recess and a protrusion, each oriented transversely to a plane of the panel and so configured that a recess of each joint structure receives the protrusion of the other joint structure. Advantageously, the recess of each joint structure is located between the protrusion thereof and a remainder of the panel.

In a preferred embodiment, each recess and each protrusion have a triangular cross-section, optionally an identical triangular cross-section.

The two joint structures may then each have a zig-zag or Z-shaped profile.

The joint may optionally also comprise adhesive held in the or both recesses to secure the respective protrusion in place once the joint has been formed.

The joint may optionally also comprise a screw or other fastener extending through the joint once it has been formed.

Embodiments of the present invention will now be more particularly described by way of example with reference to the accompanying Figures, in which:
**Figure 1** shows, in schematic cross-section, a traditional wood-framed roof structure based on a fink truss;
**Figure 2** shows, in schematic cross-section, a traditional wood-framed roof structure based on an attic truss;
**Figure 3** shows, in schematic cross-section, a conventional roof structure comprising SIP panels;
**Figure 4** shows, in schematic cross-section, a roof structure comprising SIP roofing panels embodying the present invention;
**Figures 5A** and **5B** show, in schematic cross-section, the assembly of the roof structure of Figure 4;
**Figure 6** shows a medial longitudinal cross-section of a SIP roofing panel embodying the present invention;
**Figures 7A** and **7B** are scrap cross-sections of, respectively, a lower portion of the roofing panel of Figure 6, and said lower portion mounted to an upper end of a building wall;
**Figures 8A** and **8B** are scrap cross-sections of, respectively, a lower portion of the roofing panel of Figure 6, and said lower portion mounted to an upper end of a building wall having joists and decking already in place;
**Figures 9A** and **9B** are scrap cross-sections of the respective upper ends of two roofing panels of Figure 6 aligned for installation, and said upper ends mounted to a ridge beam of a building;
**Figures 10A** to **10D** are plan views from above of successive stages in the production of a SIP roofing panel embodying the present invention;
**Figures 11A and 11B** are scrap views of a conventional double spline joint for mounting laterally-adjacent roofing panels together, separated and assembled respectively;
**Figures 12A and 12B** are scrap views of a conventional insulated block spline joint for mounting laterally-adjacent roofing panels together, separated and assembled respectively;
**Figures 13A and 13B** are scrap views of a conventional double timber spline joint for mounting laterally-adjacent roofing panels together, separated and assembled respectively;
**Figure 14A and 14B** are scrap views of a conventional solid timber spline joint for mounting laterally-adjacent roofing panels together, separated and assembled respectively; and
**Figures 15A and 15B** are scrap views of a lap joint embodying the present invention, for mounting laterally-adjacent roofing panels together, separated and assembled respectively.

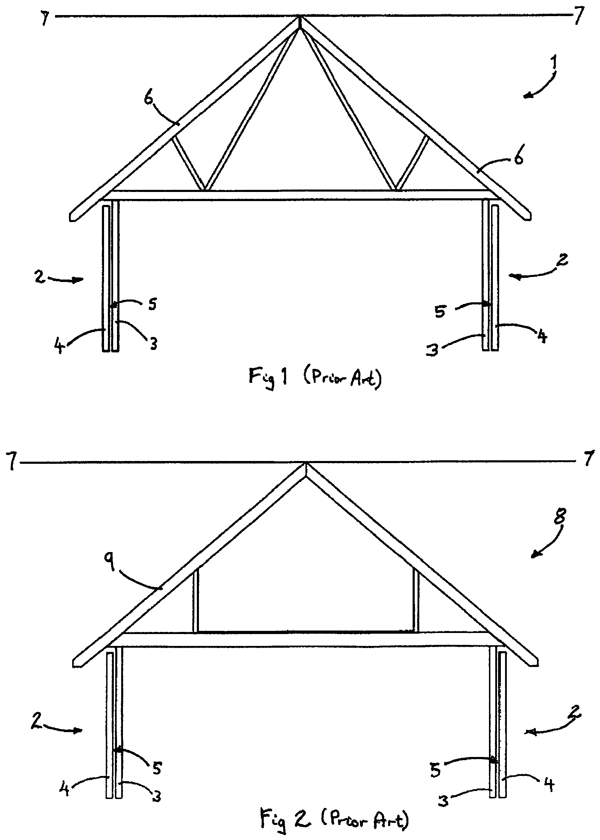

Referring now to the figures of the accompanying drawings, and to Figure 1 in particular, a first traditional wooden-framed roof structure 1 is illustrated. Walls 2 of conventional form have been built, here consisting of an inner leaf 3 and an outer leaf 4, each of SIP (Structural Insulated Panel) construction, defining between them the cavity 5 of a cavity wall structure. (NB: either leaf or both 3,4 could instead comprise traditional brick construction, or the inner leaf 4 could comprise breeze-block construction, for example, - the present invention is compatible with most or all forms of wall structure).

The first roof structure 1 is made up of a series of identical fink trusses 6, defining between them the pitch and profile of the roof. For a conventional tiled roof, a series of simple common rafters would be fitted between the trusses 6, then a series of horizontal battens would be fitted, fixed to the outer faces of the trusses 6 and rafters, and tiles (or slates) would be added on top of the wooden structure thus formed. (NB: such rafters, battens and tiling are all omitted, throughout these Figures, for simplicity and clarity).

Line 7 represents the datum line of the building structure, a reference line from which locations of structural components can be measured and specified. The datum line is conventionally a horizontal line passing through a peak of the ridge of the roof structure 1.

Figure 2 shows a second traditional wooden-framed roof structure 8. As in Figure 1, the roof structure 8 rests on walls 2 comprising an inner leaf 3 and an outer leaf 4 defining a cavity 5 between them; again, the leaves 3,4 are shown as SIP panels, but brick, breeze-block and other conventional construction materials could equally well be used.

The second roof structure 8 is made up of a series of identical attic roof trusses 9. As in Figure 1, these trusses 9 define the pitch and profile of the roof, and a conventional structure of rafters and battens can be used to support conventional tiles or slates. The datum line 7 of this structure again passes through the peak of the ridge of the roof structure 8.

The attic truss 9 differs from the fink truss 6 in that the arrangement of its internal bracing leaves a much greater free volume within the roof structure 8. Thus, it is easier to set up an attic room, and to board out floor space, than within the limitations of the fink truss 6. Neither is ideal, however.

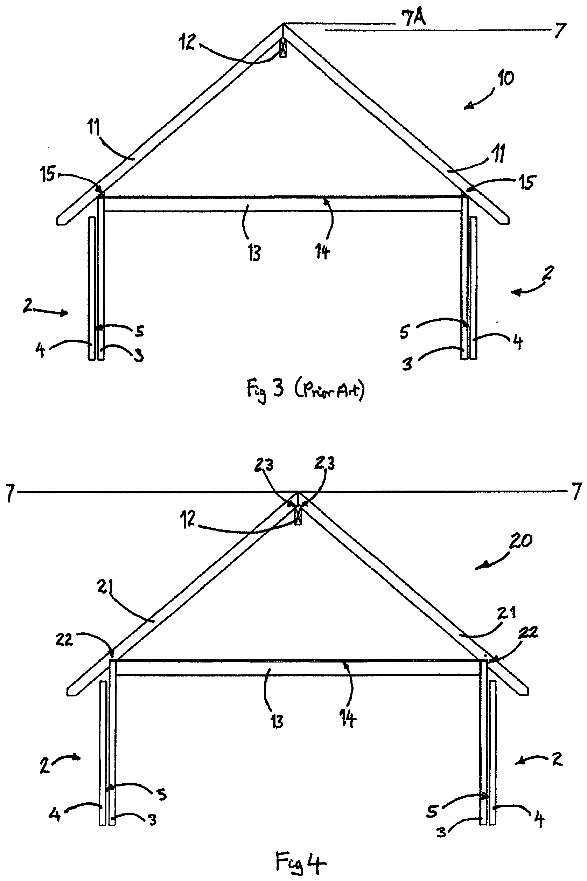

Figure 3 shows an alternative approach to roof structures using SIP structural panels similar in shape and composition to those used in the leaves 3, 4 of the walls illustrated. In this conventional SIP roof structure 10, the roof is made up of opposing pairs of SIP roofing panels 11, sloping in opposite directions and meeting at the ridge line of the roof. The respective upper ends of the SIP roofing panels 11 are supported against a ridge beam 12. This extends from end to end of the roof structure 10, the ends of the ridge beam 12 being anchored within respective gable ends of the walls 2 of the building.

Respective lower portions of the SIP roofing panels 11 are supported on top of the inner leaf 3 of each wall. A part of each panel 11 that extends beyond the wall 2 thus comprises the eaves of the roof structure 10.

As can be seen, not only is this roof structure 10 made up of inherently thermally insulating materials, but there is much more free space within the roof structure 10. Joists 13 can be fitted to extend between the walls 2, before the roof structure 10 is added, supporting a decking structure 14 extending all across the roof space. (In the fink 6 and attic 9 trusses, the horizontal joists form part of each truss 6, 9, and both trusses 6, 9 are actually supported by their joists resting on the top of the inner wall leaf 3).

This conventional SIP roof structure 10 still has disadvantages, however. To align and support the SIP roofing panels 11 at the correct angle, tilt fillets 15, right-triangular-section wooden components, must be mounted on top of each inner wall leaf 3. The tilt fillets 15 must be made with exactly the right angle to contact and support the lower portion of the SIP roofing panel 11 when its upper end is in position against the ridge beam 12. The ridge beam 12 itself should have a further tilt fillet 15, of isosceles triangular section, mounted along its upper surface, so as to align the upper ends of the SIP roofing panels 11 and to spread the load from their weight, which would otherwise be concentrated on the upper corners of the (rectangular section) ridge beam 12.

Even with the tilt fillets 15 in place, the problem remains that the SIP roofing panels 11 need to be held in exactly the right position, to avoid them sliding sideways and/or downwards off the top of the ridge beam 12, under their own weight, before they can be securely fastened to the ridge beam 12 and the walls 2.

One further issue is that supporting the SIP roofing panels 11 on the ridge beam 12 and the tops of the walls 2 (and the respective tilt fillets 15) in this way leads to an increase in the height of the ridge line of the roof structure 10. As Figure 3 illustrates, the peak height 7A of the conventional SIP roof structure 10 is now noticeably higher than the standard datum line 7. This increase in height can change the appearance of the building, and can even cause problems with planning permission where overall building height is of a sensitive nature.

Therefore, the roof structure of the present invention was devised. The basic differences between the conventional SIP roofing structure 10 and a new SIP roofing structure 20 can be seen by comparing Figures 3 and 4.

In the new SIP roofing structure 20 shown in Figure 4, there are again opposing pairs of SIP roofing panels 21, sloping in opposite directions and meeting at their upper ends at a ridge of the roof. The upper ends are again supported by a ridge beam 12 of the same form as that of Figure 3, and the lower portions of the SIP roofing panels 21 are again supported on top of the inner leaf 3 of a respective wall 2.

However, the new SIP roofing panels 21 shown in Figure 4 are each provided with a first elongate socket 22 formed into its underside, near the lower (in use) end of the roofing panel 21, and a second socket 23 formed into its underside at its upper (in use) end. Each socket 22, 23 has a right-angled triangular cross-section, and extends all across the new SIP roofing panel 21 from side to side (shown and described in more detail below).

Thus, as shown in Figure 4, the first socket 22 of each new SIP roofing panel 21 receives the top end of the inner leaf 3 of the respective wall 2, while the second sockets 23 each receive a respective top corner of the ridge beam 12, with the respective upper ends of the new roofing panels 21 meeting vertically above the ridge beam 12.

The new SIP roofing panels 21 are thus located positively in the correct position, obviating the need for external support to keep them accurately aligned while they are secured to the ridge beam 12 and the top of the wall leaf 3.

Additionally, since the new SIP roofing panels 21 do not need to be jacked up on tilt fillets 15, the new SIP roofing structure 20 has its datum line 7 aligned with the ridge line of the roof once more. The height and proportions of the new SIP roof structure 20 can be practically the same as those of the conventional roof structures 1, 8 above.

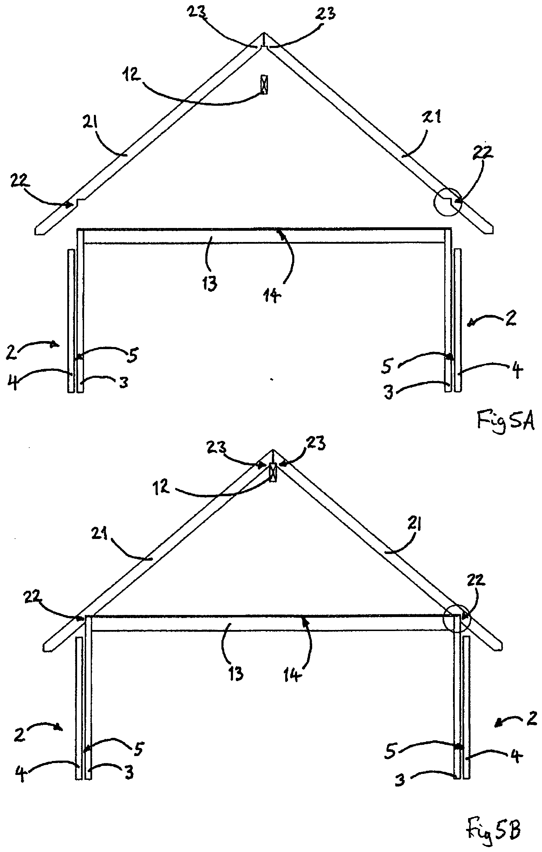

The exact form of the sockets 22, 23 may be clearer with reference to Figures 5A and 5B, which show how the new SIP roofing structure 20 may be installed.

In Figure 5A, a roof section made up of two new SIP roofing panels 21 is shown, ready to be lowered on to the walls 2 and ridge beam 12 of a house. Here, the position and the right-angled triangular profile of the first socket 22 of the new SIP roofing panel 21 are clearly visible. When the new SIP roofing panel 21 is held at the correct angle for the pitch of this roof, the first socket 22 has one horizontally-extending face, which may be supported conformably on a flat top surface of the inner wall leaf 3, and one vertically-extending face, which will then contact an outer face of the inner wall leaf 3, locating the roofing panel 21 in place.

The position and the right-angled triangular profile of the second sockets 23 of the respective new SIP roofing panels are also more clearly visible. As with the first sockets 22, when each roofing panel 21 is at the correct angle, each second socket 23 has a horizontally-extending face, supportable conformably on a flat top surface of the ridge beam 12, and a vertically-extending face, that will then contact a side face of the ridge beam 12, locating the roofing panel 21 in place laterally. Additionally, Figure 5A shows how the respective second sockets 23 will also align so that they effectively form a single rectangular-section socket, configured to receive an upper portion of the ridge beam 12.

Thus, when the roof section is in place as shown in Figure 5B (which substantially corresponds to Figure 4), the upper ends of each inner wall leaf 3 are received in a respective first socket 22 and the upper corners of the ridge beam 12 are received in respective second sockets 23. The new SIP roofing panels 21 of the roof section are thus supported and located in the correct position, ready to be secured to the walls 2 and ridge beam 12 without significant risk of sliding out of position, or off the walls 2 and ridge beam 12 entirely.

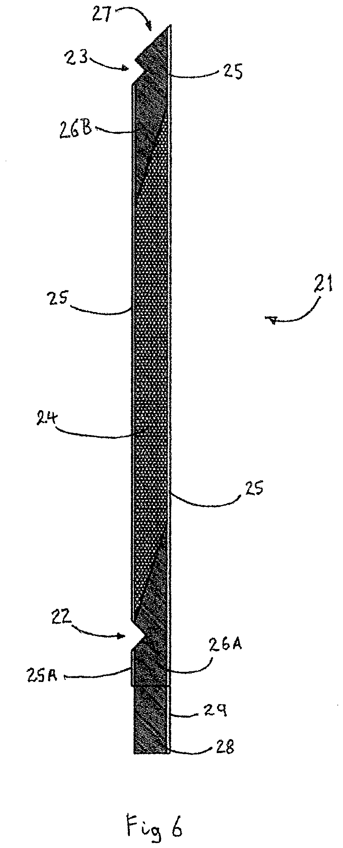

Figure 6 is a median-line longitudinal cross-section of a new SIP roofing panel 21, to show its structure in more detail.

A core of the new SIP roofing panel 21 comprises a slab of thermal insulating material 24, in this example comprising polyurethane (PU) foam, although expanded polystyrene, extruded polystyrene and polyisocyanurate (PIR) insulating material may also be used. Other thermal insulating materials may also be used, as long as they have similar low densities and rigidities to the materials listed. The insulating material may be formed in situ, or may be cut from pre-formed blocks. Laminated blocks of more than one different insulating material could also be employed.

The insulating material core 24 is sandwiched between two skins 25 of oriented strand board (OSB), a strong, tough composite material made from thin strands and strips of wood bonded together in a resin matrix, widely used in conventional SIP panels. Other structural facing boards, such as plywood, magnesium oxide (MGO) board, glass fibre or cement particle board (CPB) may be used instead.

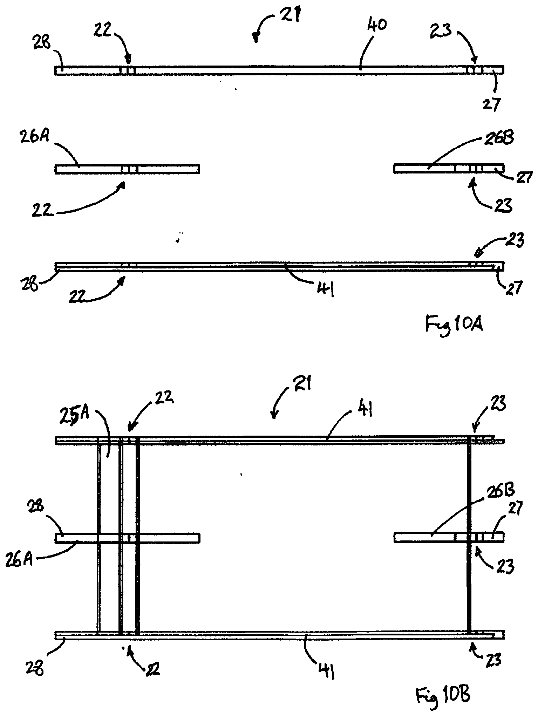

Each lateral edge of the new SIPS roofing panel 21 is provided with an elongate timber reinforcement extending from end to end, thus resembling a form of rafter. These are not visible in Figure 6, but Figures 10A to 10D below show them in detail. However, unlike any conventional SIP panel, whether for roofing or walls, the new SIP roofing panel 21 has additional timber reinforcement along its longitudinal mid-line, which is shown in Figure 6. Here an elongate discontinuous rafter 26 is embedded in the insulating material core 24 of the new SIP roofing panel 21. The discontinuous rafter 26 comprises a first 26A and a second 26B elongate portion. The portions 26A, 26B of the discontinuous rafter 26 are in alignment, with the first portion 26A being located at the lower, in use, end of the roofing panel 21 and the second portion 26B being located at its upper, in use, end. The sheets 25 of OSB extend to cover the portions of the discontinuous rafter 26 as well as the insulating material 24 (except as noted below).

The first socket 22 is cut into the first portion 26A of the discontinuous rafter 26, and the second socket 23 is likewise cut into the second portion 26B thereof. The presence of the rafter portions 26A, 26B hence reinforce the new SIP roofing panel 21 where it might otherwise be at its weakest, were its core made up entirely of the insulating material 24. This structure also helps to transfer loads more widely from the sockets 22, 23 into the roofing panel 21.

It should be noted that the first socket 22 is located adjacent an upper, in use, end of the first portion 26A of the discontinuous rafter 26. Since the first socket 22 extends all the way across the new SIP roofing panel 21, a lowest, in use, region 25A of the skin 25 of OSB is physically separated from a remainder of the skin 25 by the first socket 22.

The second socket 23, on the other hand, is located intersecting with the uppermost end of the second portion 26B of the discontinuous rafter 26 and so the skin 25 of OSB runs only up to a lower lip of the second socket 23 and not beyond.

This arrangement is due to the alignment of an upper end face 27 of the second portion 26B of the discontinuous rafter 26 (and equally of an upper end face of the entire roofing panel 21 to either side of the discontinuous rafter 26). This is angled so that the respective upper end faces 27 of two new SIPS roofing panels 21 may be lined up, with the roofing panels 21 forming exactly the desired pitch for the roof, as seen in Figure 5A. For the second sockets 23 of the respective roof panels 21 to match up and enclose the upper portion of the ridge beam 12, they have to be cut to extend into the upper end surface 27, as shown.

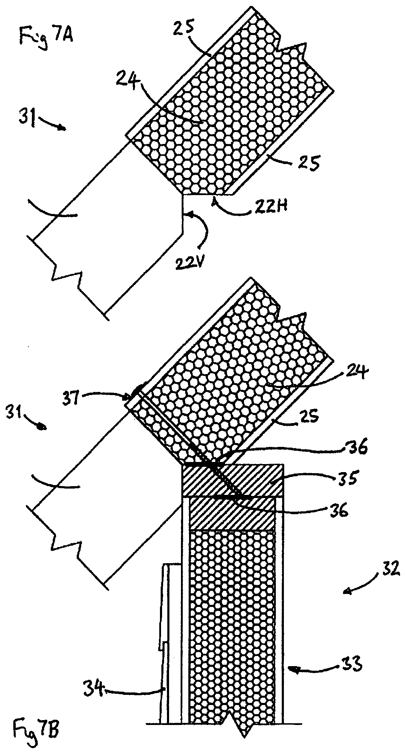

At the lower, in use, end of the new SIP roofing panel 21 the first portion 26A of the discontinuous rafter 26 extends beyond the main body of the roofing panel 21, as an outwardly projecting rafter tail 28 (visible also in Figures 7A, 7B, 8A, 8B and 10A to 10D). This rafter-tail portion 28 here has a cover strip 29 of OSB extending along its upper, in use, surface, although its sides and lower, in use, surface are here left as bare timber (for example, for aesthetic reasons, as they may be visible from below as timbers supporting the eaves of the completed roof).

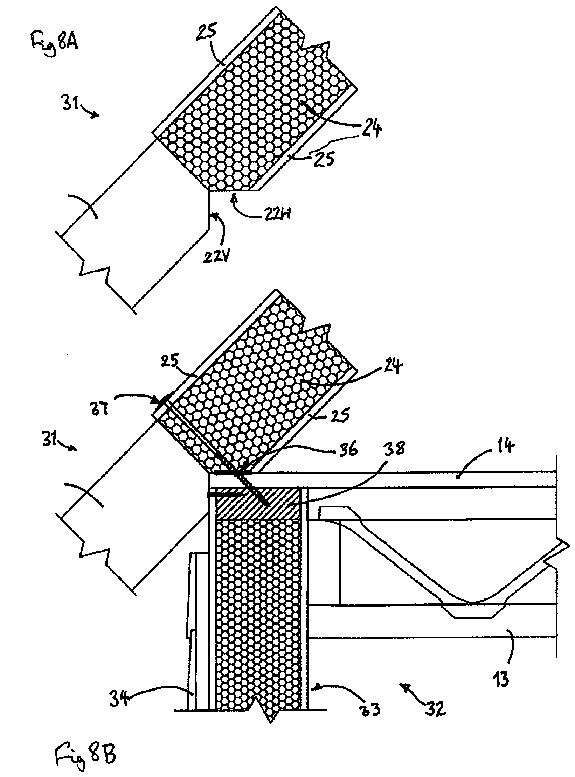

Turning to Figures 7A, 7B, 8A and 8B, two arrangements are shown of how a second example of a new SIP roofing panel 31 can be mounted to an upper end of a wall 32. (NB: the second new SIP roofing panel 31 differs slightly from the new SIP roofing panel 21 shown above the wall 32 shown differs slightly from the wall 2 shown above, but the arrangements are generally applicable).

As shown in Figure 7A, the second new SIP roofing panel 31 has its first socket 22 formed at a junction of the insulating material core 24 and the lower portion 26A of the discontinuous rafter 26, and only the insulating material core 24 is covered by OSB skins 25. Figure 7A shows clearly how the first socket 22 has a first face 22H, which is horizontal when the roofing panel 31 is aligned to form the desired roof pitch, and a second face 22V, which is then vertical.

Referring to Figure 7B, the wall 32 to which the second new SIP roofing panel 31 is to be mounted consists of an inner leaf 33 comprising a conventional SIP panel, but an outer leaf 34 comprising decorative clapboarding. Additionally, an extra component is mounted along a top edge of the inner leaf 33 - a rectangular section length of timber, often referred to as a top plate 35. Unlike the tilt fillets 15 referred to above, a top plate 35 does not change the geometry of this joint; it simply provides a thicker piece of wood to receive fastenings. In this example, the top plate 35 is held in position sufficiently securely with a patch of adhesive 36.

The second new SIP roofing panel 31 is mounted to the wall 32, with an upper corner of the top plate 35 received into the first socket 22. The first face 22H of the first socket 22 is thus supported on a horizontal upper surface of the top plate 35, while the second face 22V is in contact with a vertical surface of both the top plate 35 and the inner wall leaf 33.

In this arrangement, a patch of adhesive 36 has been applied to the first surface 22H of the socket 22 and/or to the top surface of the top plat 35, to help to hold the joint together. The joint between the second roofing panel 31 and the wall 32 is secured permanently by a SIP screw 37, which is of a specialist form designed for use to secure SIP panels. This screw 31 extends through the outer skin 25 of OSB and the core of insulating material 24, extending out through the first face 22H of the first socket 22 into the solid timber of the top plate 35. The combination of the joint geometry, adhesive 36 and SIP screw 37, at multiple locations across the roofing panel 31, is sufficient to mount the second new SIP roofing panel 31 securely in place.

In Figures 8A and 8B, the same second new SIP roofing panel 31 is present as in Figures 7A and 7B, but the wall 32 has not been fitted with a top plate 35. Instead, joists 13 have already been installed, to extend across, from the wall 32 shown, to an opposite wall of the building, and decking 14 has already been installed on top of the joists 13. The decking 13 is continued to extend over the top of the inner leaf 33 of the wall 32 (this arrangement corresponds to that shown in Figure 4, above).

In Figure 8B, the second new SIP roofing panel 31 is again mounted to the wall 32, but with an upper corner of the decking 14 now received into the first socket 22. The first face 22H of the first socket 22 is thus supported on a horizontal upper surface of the decking 14, while its second face 22V is in contact both with a vertical edge of the decking 14 and a vertical surface of the inner wall leaf 33.

As in Figure 7B, a patch of adhesive 36 is used to help to hold the joint together, being applied between the first surface 22H of the first socket 22 and the top surface of the decking 14. A SIP screw 37 is used to fasten the second new SIP roofing panel 31 and the wall 32 permanently together. As above, the SIP screw 37 is passed through the outer skin 25 of OSB and the core of insulating material 24, emerging through the first face 22H of the first socket 22. Here, however, the SIP screw 37 is then passed through the decking 14 and beyond, into the SIP panel forming the inner wall leaf 33. This takes advantage of a standard feature of SIP panels, which is protecting the core of insulating material 24 by incorporating a length of timber along each lateral edge of the panel, between the OSB skins 25. There is hence a further thickness of solid timber 38 beneath the decking 14, into which the SIP screw may extend. Thus, the combination of the joint geometry, adhesive 36 and SIP screws 37 installed at multiple locations across the roofing panel 31, is sufficient to mount the second new SIP roofing panel 31 securely in place.

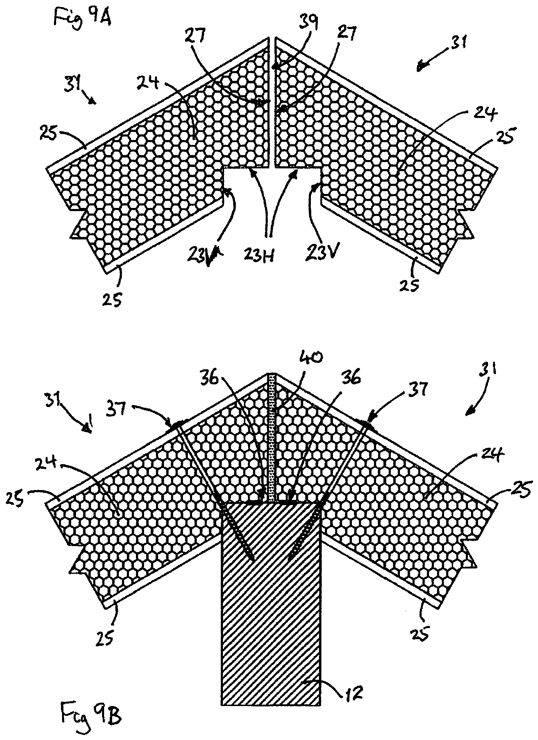

Figures 9A and 9B illustrate the assembly of the joints used to secure the upper ends of the new SIP roof panels 21, 31 to the ridge beam 12.

Figure 9A shows the respective upper ends of two second new SIP roofing panels 31 aligned and ready to be mounted to the ridge beam 12. NB: This view shows a section of the roofing panels 31 located away from the discontinuous rafter 26, so that there is no timber reinforcement at the upper end 27 of the roofing panel 31.

When the angled upper ends 27 of the respective roofing panels 31 are vertically aligned together as shown, the respective triangular second sockets 23 are similarly aligned to form, in effect, a rectangular socket, as referred to above. In this alignment, a first face 23H of each second socket 23 extends horizontally and the second face 23V of each second socket 23 extends vertically. The two first surfaces 23H are also coplanar. Note: it is preferred for there to be a narrow gap 39 between the upper end faces 27, maybe about a centimetre or so wide, for reasons set out below.

Turning to Figure 9B, each roofing panel 31 is mounted to the ridge beam 12 with a respective upper corner of the ridge beam 12 received into each second socket 23. The first face 23H of each second socket 33 is thus supported on a horizontal upper surface of the ridge beam 12, while the second face 23V of each second socket 23 is in contact with a vertical side surface of the ridge beam 12.

A patch of adhesive 36 has been applied between the first surface 23H of each second socket 23 and the upper surface of the ridge beam 12, to help to hold the joint together, at least during assembly. However, the joint is secured permanently by the use of further SIP screws 37, as for the joints shown above. Each SIP screw 37 passed through the outer OSB skin 25 and the insulating material core 24, emerging from the core 24, in this particular case, through a junction of the first 23H and second 23V faces of each second socket 23. The SIP screw 27 then extends inwardly through the respective upper corner of the ridge beam 12 and deep into the solid timber of the ridge beam 12.

Additionally, the narrow gap 39 left between the upper end faces 27 of the roofing panels 31, seen in Figure 9A, means that each second surface 23V of the second sockets 23 can be brought firmly into contact with a respective side surface of the ridge beam 12, without risking the upper end faces 27 fouling each other. As a final element of the joint securing the roofing panels 31 to the ridge beam 12, the gap 39 is then filled with an expanding foam filler 40, holding the upper end faces 27 together and preventing subsequent access of moisture to an interior of the joint. The "virtual" rectangular socket formed from the two triangular second sockets 23 is thus tightly fitted around the ridge beam 12, adding to its lateral stability.

Stages of construction of the new SIP roofing panel 21 are shown in Figures 10A to 10D. (The continuation of the second new SIP reinforcing panel 31 is similar).

Figure 10A shows the timber components laid out. As well as the first 26A and second 26B portions of the discontinuous rafter 26, which will extend along a midline of the roofing panel 21, 31, each roofing panel 21, 31 comprises specialist rafters known as verge rafters 41, which will extend continuously along respective edges of the roofing panel 21, 31.

Note: two different forms of the verge rafter are shown, indicated as features 40 and 41; these will be described below.

Figure 10B shows the position when the lower, in use, OSB skin 25 has been mounted to the respective surfaces of the rafters 26A, 26B, 40, 41, As will be seen, referring also to Figure 6, at the upper, in use, end of the roofing panel 21 the lower OSB skin 25 extends up to the edge of the second socket 23, while the lowest region 25A of the OSB skin 25 is separated from a remainder of this OSB skin 25 by a gap left for the first socket 22 to extend across an underside of the roofing panel 21. This forms a "tray" structure with two shallow, parallel, upstanding sides.

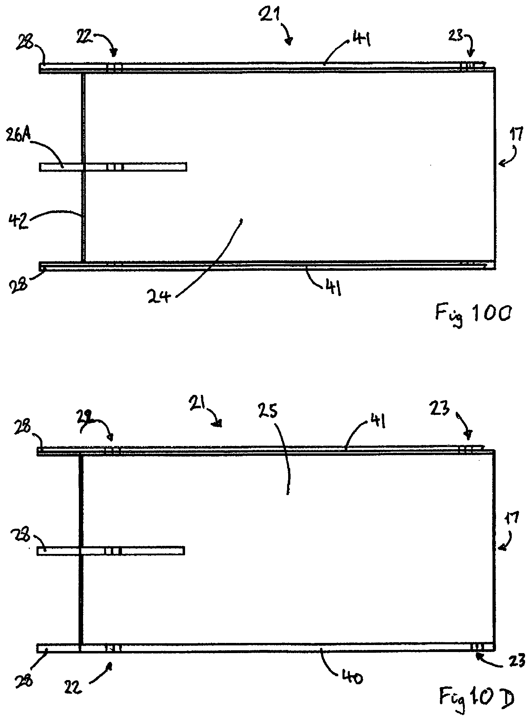

In Figure 10C, this "tray" has been filled with the core 24 of insulating material, here comprising PU foam expanded in situ. Other materials may be used, such as expanded polystyrene, extended polystyrene or polyisocyanurate. The core 24 may also be cut to size from larger blocks of insulating materials, fitted around the discontinuous rafter 26. A laminated core 24 made from more than one material is also envisaged. A blanking panel 24 of OSB covers a lower end of the core 24.

In Figure 10D, an upper skin of OSB 25 has been fitted over the insulating material core 24 and the discontinuous rafter portions 26A, 26B (although the first portion 26A is still shown, as a point of reference).

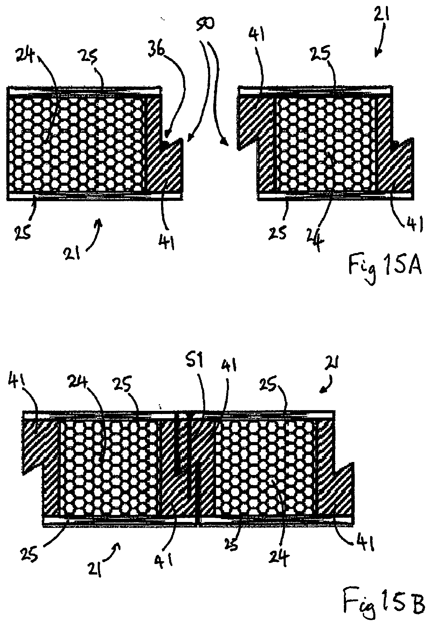

In Figure 10D, the two forms of verge rafters 40, 41 are again shown while in Figure 10B and 10C, only one form of verge rafter 41 is shown. This is because the roofing panels 21 of Figures 10A to 10D have been laid out to represent a set of four roofing panels 21, as might be used together to cover one face of a pitched roof of a house. The outer verge rafters 40 will form the extreme edges of the roof, and are plain rectangular-section timber. The inner verge rafters 41 are profiled to lock the roofing panels 21 together, laterally, as shown in detail in Figures 15A and 15B.
Note: while the positions of the first and second sockets 22, 23 are shown throughout Figures 10A to 10D, this is mainly for reference. Normally, the sockets 22, 23 are cut across the entire width of the roofing panel 21, including the rafters 26, 40, 41, after assembly. The inner verge rafters 41 may be cut before or after assembly.

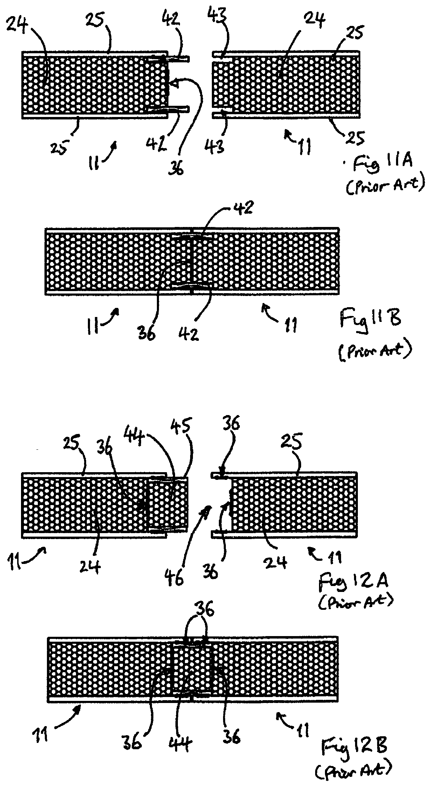

Simply abutting the edge surfaces of adjacent SIP roofing panels would be unacceptable, due to the risk of leaving gaps for warm air exit and/or moisture penetration, through the roof. A variety of arrangements for connecting adjacent SIP panels are known, and are shown in Figures 11A to 14B, but these have been found not to be wholly satisfactory, and so a new interlocking arrangement has been invented, illustrated in Figure 15.

Figures 11A and 11B show an existing double spline joint between two conventional SIP panels 11 disassembled and assembled. Two splines 42, each comprising a thin strip of wood, are embedded in a first of the SIP panels 11, immediately adjacent each OSB skin 25. Corresponding sockets 43 are formed in the insulating material core 24 of the second of the SIP panels 11, each configured to receive a respective spline 42 as a tight fit. A patch of adhesive 36 is applied to a surface of the insulating material core 24 of one said SIP panel 11 that will contact a corresponding surface of the other said SIP panel 11 when they are brought together. Adhesive 36 may also be applied to the splines 42 themselves.

Thus, when the splines 42 are inserted into the sockets 43, the two SIP panels 11 are held together, edge to edge, by the adhesive 36, by the mechanical strength of the splines 42, and by how firmly they are seated in the sockets 43.

Figures 12A and 12B show, again disassembled and assembled, an existing insulated block spline joint between two conventional SIP panels 11. An elongate block of insulating material 44 is prepared, optionally with thin wooden facings 45 for protection. The insulating material block 44, including facings 45, has substantially the same depth as the insulating material cores 24 of the SIP panels 11.

The block 44 is embedded in a recess formed in the edge of a first of the SIP panels 11, so that about half of the block 44 extends outwardly from the respective panel edge. A corresponding recess 46 is formed in the edge of the other SIP panel 11, configured to receive the outwardly-extending part of the insulating material block 44 as a tight fit. Patches of adhesive 36 are applied to potential contact surfaces.

Thus, when the joint is assembled, the insulating material block 44 bridges the two SIP panels 11, which are held together by the adhesive 36, by the strength of the insulating material block 44 and its facings 45, and by how firmly the block 44 is mechanically held by each SIP panel 11.

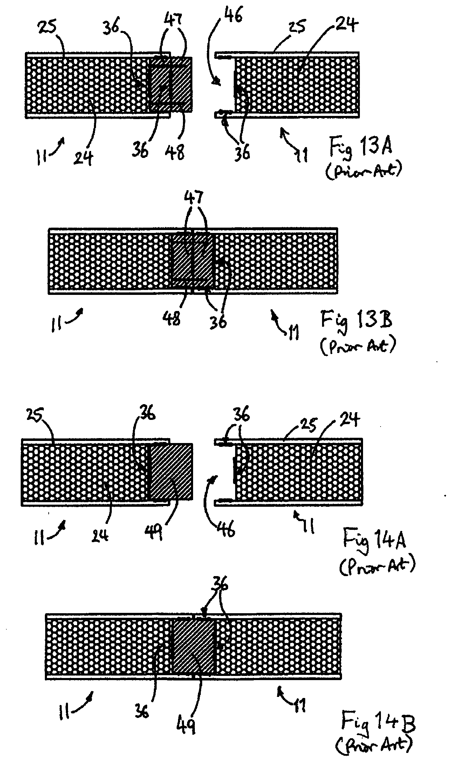

Figures 13A and 13B show, assembled and unassembled, a known double timber spline joint between two SIP panels 11.

A pair of rectangular-section lengths of timber 47 are held together with screws 48 and adhesive 36 to form a generally square-section body, having a depth substantially the same as the insulating material core 24 of the SIP panels 11. Much like the insulated block joint of Figure 12, the timber block 47 is inserted into recesses in the corresponding edges of the two SIP panels 11, with about half being held by one SIP panel 11 and half by the other SIP panel 11. Again, patches of adhesive 36 are used on contact surfaces.

Thus, when this joint is assembled, the two SIP panels are held together by the adhesive 36, by the strength of the timber and the screws 48 of the block 47 and how firmly it is held, mechanically, by each SIP panel 11.

Figures 14A and 14B show another known joint for holding two SIP panels 11 together, known as a solid timber spline joint.

This differs from the double timber spline joint, above, mainly in that a single elongate timber block 49 is used, rather than a block made by screwing two timber lengths 47 together. Again, the block 49 bridges the assembled joint, and patches of adhesive 36 are applied to contact surfaces to increase joint strength.

Unfortunately, all of the above joints have major drawbacks, particularly while a roof is being constructed. They can all be difficult to assemble, especially since it is necessary to force the joints completely home, to obviate leaks in or out between the panels.

Exerting the necessary forces while maintaining alignments is difficult, and could be undesirable if working at height. Conversely, if the joints are made a looser fit to be easier to assemble, they will be much less reliable as joints. The double timber spline joint of Figures 13A and 13B is particularly notorious for allowing some air leakage through the joint, however well assembled.

The interlocking lap joint shown in Figures 15A and 15B was therefore invented. Figure 15A shows in schematic form two new SIP roofing panels 21 provided with the components of this joint, and Figure 15B shows in schematic form the assembled joint; in each case, the new SIP roofing panels 21 are shown significantly out of proportion so as to emphasise the joint structure.

Each new SIP roofing panel 21 is provided with an interlocking rafter 41 extending along each lateral edge (this is not shown for the left-hand roofing panel 21 in Figure 15A for reasons of space). The interlocking rafters 41 have a constant cross-sectional profile 50 as shown. The interlocking rafters 41 on each side of each roofing panel 21 are identical, except that one is inverted relative to the other.

Each profile 50 comprises a triangular-section recess proximal to the respective roofing panel 21 and a corresponding triangular-section protrusion distal to the roofing panel 21. The profile 50 is symmetrical, such that when an identical but inverted interlocking rafter 41 on an adjacent new SIP roofing panel 21 is offered up to this interlocking rafter 41, the respective protrusions are aligned with the corresponding recesses and can be received into the recesses, forming the joint.

The interlocking nature of the joint this prevents the roofing panels 21 from sliding apart, and its overlapping structure helps to prevent penetration of air and/or moisture through the joint.

As shown in Figure 15A, the joint may be strengthened by running a bead of adhesive along within the recess where the insertion of the corresponding protrusion will squeeze the adhesive 36 over much of the respective contact area between recess and protrusion, strengthening the joint.

Also, as shown in Figure 15B, the joint can be further strengthened and stabilised by passing a screw 51 or the like through both rafters 41.

This joint fits neatly together as the roofing panels 21 are added to the roof; each interlocking rafter 41 is easy to clip over an adjacent inverted interlocking rafter 41, and no force is needed to push the components of the joint together. The roofing panels 21 thus both fit neatly and stably on to the building and to their neighbouring roofing panels without excessive effort, until they can be more permanently attached.

## Claims

1. A roofing panel (21, 31) for use in the construction of pitched roofs (20), comprising a rectangular flat panel (21, 31) having a ridge end located uppermost in use, an eaves end opposite said ridge end and located lowermost in use, and first and second lateral edges extending along opposite sides of the panel (21, 31) between said ridge end and said eaves end, the panel (21, 31) comprising a core (25) of thermally insulating material sandwiched between layers (25) of thin, tough structural material, said layers (25) forming in use opposite inner and outer surfaces of the panel (21, 31), **characterised in that** the panel (21, 31) is provided with two elongate transverse notches (22, 23), each extending across the panel (21, 31) between its first and second lateral edges, parallelly to the ridge and eaves ends of the panel (21, 31), a first of said transverse notches (22) being disposed adjacent the eaves end of the panel (21, 31) and a second of said transverse notches (23) being disposed at or adjacent the ridge end of the panel (21,31).

2. A roofing panel (21, 31) as claimed in Claim 1, **characterised in that** each notch (22, 12) comprises two faces (22H, 22V, 23H, 23V) extending into the panel (21, 31) to meet substantially at a right angle.

3. A roofing panel (21, 31) as claimed in either Claim 1 or Claim 2, **characterised in that** the ridge end of the panel (21, 31) extends at an acute angle to the outer surface of the panel (21, 31), such that it extends substantially vertically in use.

4. A roofing panel (21, 31) as claimed in any one of the preceding claims, **characterised in that** the panel is provided on at least one lateral edge with coupling means (41) adapted to link the roofing panel (21, 31) to an adjacent roofing panel (21, 31).

5. A roofing panel (21, 31) as claimed in Claim 4, **characterised in that** said coupling means (41) is adapted to link with a corresponding coupling means (41) on the adjacent roofing panel (21, 31).

6. A roofing panel (21, 31) as claimed in either Claim 4 or Claim 5, **characterised in that** each said coupling means (41) comprises protrusion means and recess means, each aligned transversely to a plane of the panel (21, 31), with the recess means being located between the protrusion means and a remainder of the panel (21, 31).

7. A roofing panel (21, 31) as claimed in Claim 6, characterised said protrusion means and said recess means each extend continuously along the lateral edge of the roofing panel (21, 31).

8. A roofing panel (21, 31) as claimed in any one of Claims 4 to 7, **characterised in that** the coupling means (41) is adapted to overlap with a corresponding coupling means (41) on an adjacent roofing panel (21, 31) to create a barrier to passage of air and/or moisture between said roofing panels (21, 31).

9. A roofing panel (21, 31) as claimed in any one of Claims 4 to 8, **characterised in that** the coupling means (41) is adapted so to interlock with a corresponding coupling means (41) on an adjacent roofing panel (21, 31) as to oppose lateral separation of the respective roofing panels (21, 31).

10. A pitched roof (20) for a building, comprising a plurality of roof panels (21, 31) as claimed in any one of the preceding claims, **characterised in that** each said roof panel (21, 31) extends from a ridge line (7) of the pitched roof (2) to a top of a wall (2) of the building.

11. A pitched roof (20) as claimed in Claims 10, **characterised in that** the building comprises two opposed gable end walls and a ridge beam (12) extending from adjacent a peak of one said gable end wall to adjacent a peak of the other said gable end wall, with the first notch (22) of each roofing panel (21, 31) engaged with the top of a respective wall (2), and the second notch (23) of each roofing panel (21, 31) engaging with the ridge beam (12).

12. A pitched roof (20) as claimed in either Claim 10 or Claim 11, **characterised in that** each roofing panel (21, 31) is mounted to each laterally adjacent roofing panel (21, 31) in the roof by means of an interlocking lap joint (41, 41).

13. A method for constructing a pitched roof (20) for a building, comprising the steps of providing a plurality of roofing panels (21, 31) as claimed in any one of Claims 1 to 9, providing a building having opposed side walls (2) and a ridge beam (12) extending parallelly to said side walls (21) so as to define a ridge line of the pitched roof (20), **characterised in that** it comprises the step of mounting said roofing panels (21, 31) such that a first notch (22) of each roofing panel (21, 31) engages with a top of the side walls (2) and a second notch (23) of each roofing panel (21, 31) engages with the ridge beam (12).

14. A method for constructing a pitched roof (20) as claimed in Claim 13, **characterised in that** it comprises the step of coupling each roofing panel (21, 31) to each other roofing panel 21, 31) laterally adjacent it on the roof (20) by means of interlocking lap joint structures (41) provided along the respective lateral edges of the roofing panels (21, 31).

15. A joint for coupling together two laterally adjacent roofing panels (21, 31), within a roof (20) structure, said joint comprising a first joint structure (41) extending along a lateral edge of a first of the roofing panels (21, 31), and a second joint structure (41) extending along an opposing lateral edge of a second of the roofing panels (21, 31), **characterised in that** said joint structures (41) overlap to create a barrier against passage of air and/or moisture through the joint and interlock to oppose lateral separation of the roofing panels (21, 31).
